**Europäisches Patentamt**

**European Patent Office**

**Office européen des brevets**

(19)

(11) Veröffentlichungsnummer: **0 309 686 B1**

(12) # EUROPÄISCHE PATENTSCHRIFT

(45) Veröffentlichungstag der Patentschrift:
12.06.91 Patentblatt 91/24

(21) Anmeldenummer: 88112589.2

(22) Anmeldetag: 03.08.88

(51) Int. Cl.⁵: **B60R 21/13**

(54) Antriebsvorrichtung für einen Überrollbügel von Kraftwagen.

(30) Priorität: 26.09.87 DE 3732562

(43) Veröffentlichungstag der Anmeldung:
05.04.89 Patentblatt 89/14

(45) Bekanntmachung des Hinweises auf die
Patenterteilung:
12.06.91 Patentblatt 91/24

(84) Benannte Vertragsstaaten:
**ES FR GB IT**

(56) Entgegenhaltungen:
**DE-A- 1 555 955**
**DE-C- 3 410 676**

(73) Patentinhaber: **DAIMLER-BENZ**
**AKTIENGESELLSCHAFT**
**Mercedesstrasse 136**
**W-7000 Stuttgart 60 (DE)**

(72) Erfinder: **Matthias, Klaus**
**Brucknerstrasse 17**
**W-7032 Sindelfingen (DE)**

Erfinder: **Baumann, Karl-Heinz**
**Brühlstrasse 3**
**W-7031 Bondorf (DE)**
Erfinder: **Schick, Gerald**
**Bürgerplatz 8**
**W-8046 Garching (DE)**
Erfinder: **Disson, Arno**
**Taubenweg 20**
**W-7031 Grafenau 1 (DE)**
Erfinder: **Möller, Hermann**
**Blücherstrasse 11**
**W-7034 Gärtringen (DE)**
Erfinder: **Seel, Holger**
**Goethestrasse 37**
**W-7031 Aidlingen (DE)**
Erfinder: **Töpfer, Claus**
**Wurmbergstrasse 40**
**W-7032 Sindelfingen (DE)**
Erfinder: **Nerger, Uwe**
**Uhlandstrasse 45**
**W-7032 Sindelfingen (DE)**
Erfinder: **Thiele, Peter**
**Tessiner Strasse 13**
**W-7032 Sindelfingen 7 (DE)**
Erfinder: **Fleisch, Eugen**
**Weingartenstrasse 3**
**W-7407 Rottenburg 3 (DE)**

EP 0 309 686 B1

## Beschreibung

Die Erfindung betrifft eine Antriebsvorrichtung für einen Überrollbügel von Kraftwagen nach dem Oberbegriff des Anspruchs 1.

In der DE-A- 15 55 955 ist eine Dachverstärkerstange für Kraftfahrzeuge beschrieben, die an jedem Ende durch eine am Kraftfahrzeugrahmen befestigte Teleskopstütze gehalten wird, die eine aus einem Zylinder ausfahrbare, kolbenartige Teleskopverlängerung umfaßt, welche durch eine Druckfeder aus einer eingefahrenen Lage in eine ausgefahrene Lage überführbar ist, wodurch die Dachverstärkerstange aus der Ruhelage in ihre Stützlage bringbar ist.

Die Ausfahrbewegung eines das Fahrzeug bei einem Überschlag auf dem Erdboden abstützenden Überrollbügels muß nach einem erfolgten Crash-Impuls besonders schnell erfolgen und wird durch eine auf die Ausfahrkolben wirkende vorgespannte Druckfeder mit ausreichend hoher Geschwindigkeit erreicht.

Viele Fahrzeuginsassen möchten nun aber einen Kraftwagen, bei dem das Dach abgenommen wurde, grundsätzlich nur mit einem sich in aufgerichteter Stützlage befindenden Überrollbügel fahren. Dabei wird es als unangenehm empfunden, wenn der Überrollbügel durch die Druckfeder derart abrupt aufgestellt wird. Nachteilig ist auch, daß es nicht möglich ist die Ausfahrbewegung zu unterbrechen und den Überrollbügel vor Erreichen seiner Endlage anzuhalten, wenn einer im Fond sitzenden Person eine Verletzung durch die Bewegung des Überrollbügels droht. Ebensowenig kann der Überrollbügel bei Bedarf wieder automatisch eingefahren werden, sondern muß bei stark vorgespannter Druckfeder sogar mit hohem Kraftaufwand in seine Ruhelage zurückgedrückt werden.

Es stellt sich die Aufgabe, einen in einer Crashsituation rasch in seine Stützlage ausfahrbaren Überrollbügel auch ohne Crash-Impuls nutzbar zu machen.

Die Aufgabe wird durch die kennzeichnenden Merkmale des hauptanspruchs gelöst.

Der angetriebene Kolben kann im mäßigem Tempo aus- und auch wieder eingefahren werden, wodurch auch die Bewegung des Überrollbügels langsam und kontrollierbar vonstatten geht. Sollte der Überrollbügel während seiner gesteuerten Bewegung einen Insassen gefährden, so kann der Überrollbügel angehalten und seine Bewegungsrichtung umgekehrt werden.

Wird während der gesteuerten Bewegung ein Crash-Impuls ausgelöst, so wird die Wirkung des Antriebs auf den Kolben aufgehoben, wodurch dieser, durch die Ausstoßfeder angetrieben, rasch in seine Stützlage ausfährt.

Nach den Ansprüchen 2 und 3 ist eine Verriegelung des Stützkolbens gegen Einfahren in jeder Position möglich, wodurch der Überrollbügel auch dann schon den Kraftwagen bei einem Überschlag abstützt, wenn er in einem ungünstigen Fall noch nicht ganz seine vollständig ausgefahrene Stützlage erreicht hat. Wird laut den Merkmalen von Anspruch 5 eine zusätzliche Kolben-Zylinder-Einheit als Antrieb für den Stützkolben gewählt, so ist es entsprechend Anspruch 6 vorteilhaft, diese Kolben über eine Crash-Kupplung lösbar zu verbinden, so daß nach einem Crash-Impuls der Antrieb vom Stützkolben lösbar ist, der dann ungebremst und durch die Ausstoßfeder beschleunigt in seine Stützlage ausfährt.

Das gleiche Ergebnis ist zu erzielen, wenn die Zylinder der beiden Kolben-Zylinder-Einheiten nach Anspruch 9 lösbar miteinander verriegelt sind, wobei nach einem Crash-Impuls der Antriebskolben zusammen mit seinem Zylinder durch den federbelasteten Stützkolben mitgenommen wird. Da der Zylinder durch die Führungshülse ausgerichtet bleibt, kann er zur Regenerierung der Verbindung zwischen den Zylindern wieder entlang der Führungshülse in die Verriegelung eingefahren werden.

Die Merkmale einer Ausgestaltungsmöglichkeit einer Crash-Kupplung sind in Anspruch 14 aufgeführt, die mit einer Ergänzung nach Anspruch 15 durch Belastung des Sperr- bolzens mit einer vorgespannten Spannfeder zu einer vorspannbaren Crash-Kupplung wird, welche zum Regenerieren der Verbindung der beiden Kolben kein externes Steuersignal an der Crash-Kupplung benötigt.

Weitere sinnvolle Ausgestaltungen eines Antriebs und funktionsgünstige Ausführungsmöglichkeiten einer Verriegelung des Stützkolbens und des Antriebskolbens sind in den Gegenständen weiterer Unteransprüche genannt.

Ausführungsbeispiele der Erfindung sind in der Zeichnung dargestellt.

Es zeigt :

Fig. 1 eine Heckpartie eines Kraftwagens mit einem klappbaren Überrollbügel in abgesenkter Ruhelage und in aufgestellter Stützlage,

Fig. 2 einen durch einen Elektromotor über ein selbsthemmendes Getriebe steuerbaren Stützkolben mit einer elektromagnetisch betätigbaren Kupplung für die Crash-Trennung und einem elektromagnetisch betätigbaren Sperrschieber,

Fig. 3 einen durch einen Elektromotor mit selbsthemmendem Getriebe und eine Hubspindel ausfahrbare, zusätzliche Kolben-Zylinder-Einheit mit einer Crash-Kupplung zwischen Stütz- und Antriebskolben und einer mechanischen Zwangssteuerung einer Sperrklinke,

Fig. 4 eine hydraulisch geregelte, zusätzliche Kolben-Zylinder-Einheit mit einem bei einem Crash entriegelbaren und in einer Führungshülse verschiebbaren Zylinder und mit elektromagnetischer Betätigung eines Sperrschiebers,

Fig. 5 eine hydraulisch geregelte, zusätzliche Kolben-Zylinder-Einheit mit einer mechanischen Zwangssteuerung einer Sperrklinke und mit einer Crash-Kupplung sowie einer automatischen Verriegelung des eingefahrenen Antriebskolbens in seinem Zylinder durch ein Rastschloß,

Fig. 6 eine hydraulisch geregelte, zusätzliche Kolben-Zylinder-Einheit in einer ausgefahrenen Stützlage mit einer hydraulischen Zwangssteuerung einer Sperrklinke,

Fig. 7 eine hydraulisch gesteuerte Verriegelung in entriegelter Position,

Fig. 8 eine hydraulisch geregelte, zusätzliche Kolben-Zylinder-Einheit entsprechend der in Fig. 6 in einer eingefahrenen Ruhelage,

Fig. 9 eine durch einen Crash-Impuls geöffnete Crash-Kupplung, und

Fig. 10 eine geschlossene Crash-Kupplung zusammen mit einer Verriegelung eines eingefahrenen Antriebskolbens in seinem Zylinder durch ein Rastschloß.

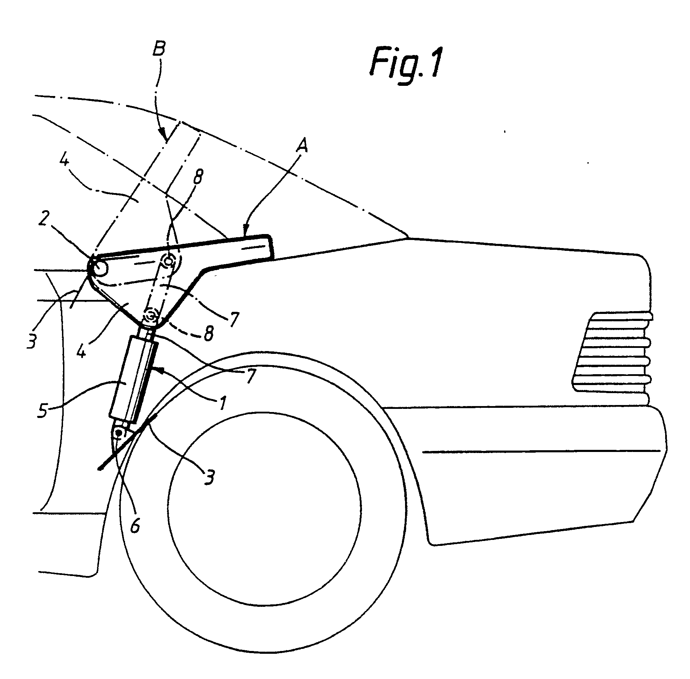

Fig. 1 zeigt eine Kolben-Zylinder-Einheit 1 für das Aufstellen eines über ein Lager 2 an einem Fahrzeugrahmen 3 klappbar gelagerten Überrollbügels 4 aus einer abgesenkten Ruhelage A in eine strichpunktiert dargestellte, aufgestellte Stützlage B.

Diese Kolben-Zylinder-Einheit 1 weist am unteren Ende ihres Stützzylinders 5 eine untere Öse 6 zur schwenkbaren Befestigung am Fahrzeugrahmen 3 und am oberen Ende ihres Stützkolbens 7 eine obere Öse 8 zur schwenkbaren Befestigung am Überrollbügel 4 auf. Nach einem durch eine Crashsituation ausgelösten Steuerimpuls wird der Stützkolben 7 blitzartig ausgefahren, wodurch der Überrollbügel 4 in die aufgestellte Stützlage B gebracht wird, in der er bei einem Überschlag des Fahrzeugs die Insassen vor Verletzungen schützt.

Wie in den Ausführungsbeispielen dargestellt, kann durch einen Steuerimpuls eine Verriegelung, durch die der Stützkolben 7 in verschiedenen Positionen arretierbar ist, wirkungslos gesetzt werden, wonach der Stützkolben 7 durch eine vorgespannte, um diesen konzentrisch angeordnete Ausstoßfeder rasch ausgefahren wird.

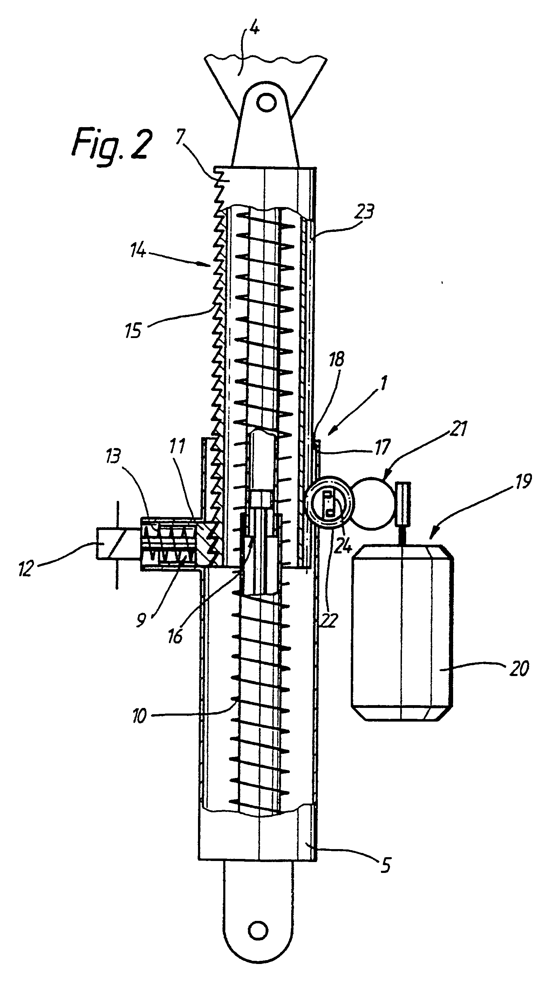

In Fig. 2 umfaßt eine Verriegelung 9 einen Sperrschieber 11, der durch einen Hubmagneten 12 in eine wirkungslose Stellung bringbar ist, und der nach dem Abschalten des Hubmagneten 12 durch eine vorgespannte Druckfeder 13 wieder in Wirkstellung verschoben wird, sowie eine entlang einer Mantellängsachse des Stützkolbens 7 als Zahnstange 14 eingeformte, in dessen Einfahrrichtung sperrend wirkende Sperrverzahnung 15, in die der Sperrschieber 11 in Wirkstellung eingreift, wodurch der Stützkolben 7 nicht mehr in Einfahrrichtung verschoben werden kann und damit die Stellung des Überrollbügels 4 abstützt.

Der Sperrschieber 11 wird während des schnellen Ausfahrens des Stützkolbens 7 infolge eines Crash-Impulses und dadurch stromlos geschaltetem Hubmagneten 12 durch die Druckfeder 13 in Anlage an der Sperrverzahnung 15 gehalten, so daß, wenn die Ausfahrbewegungn nicht vollständig vollzogen werden könnte, der Stützkolben 7 auch in nicht vollständig ausgefahrener Position auf jeden Fall gegen eine Einfahrbewegung verriegelt ist.

Innerhalb der Kolben-Zylinder-Einheit 1 befinden sich ein Dämpfersystem 16, durch das der gewünschte Geschwindigkeitsverlauf der Ausfahrbewegung des Stützkolbens 7 mit einem entsprechend ausgewählten, weitgehend temperaturunabhängigen Dämpferöl bestimmbar ist, sowie kolben- und zylinderfeste Anschläge 17 und 18, die die ausgefahrene Endstellung des Stützkolbens 7 begrenzen.

Da der Überrollbügel erfindungsgemäß auch ohne Crash-Impuls gesteuert und mit gemäßigtem Tempo aufstellbar und auch wieder ablegbar sein soll, wirkt auf diese Kolben-Zylinder-Einheit 1 ein regelbarer und durch einen Fahrzeuginsassen schaltbarer Antrieb 19, der die Bewegung und die Bewegungsrichtung des federbelasteten Stützkolbens 7 steuert und einen Elektromotor 20 und ein selbsthemmendes Getriebe 21 umfaßt, das mit einem Abtriebsritzel 22 in eine entlang einer Mantellängsachse des Stützkolbens 7 verlaufende Evolventenverzahnung 23 eingreift. Damit der Antrieb 19 bei einem Crash Impuls vom Stützkolben 7 abkuppelbar ist, der danach durch eine Ausstoßfeder 10 besonders schnell ausgefahren wird, ist dem Abtriebsritzel 22 eine Kupplung 24 vorgelegt.

Bei eingerückter Kupplung 24 wird der Stützkolben 7 durch die Selbsthemmung des Getriebes 21 und durch den Sperrschieber 11 in jeder gewählten Stellung arretiert.

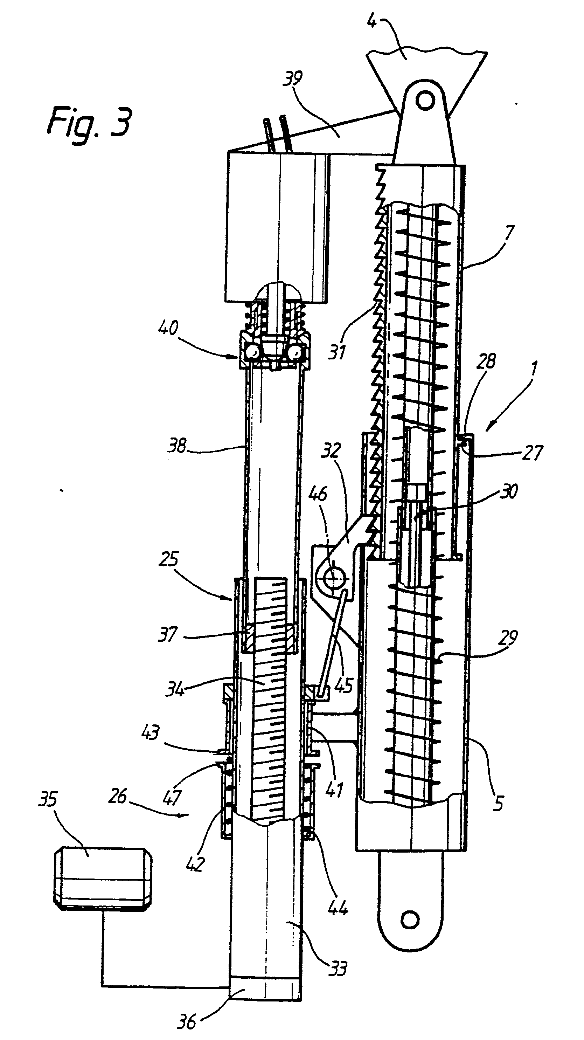

In Fig. 3 ist eine zusätzliche, steuerbare Kolben-Zylinder-Einheit 25 vorgesehen, die auf eine den Überrollbügel 4 schwenkende Kolben-Zylinder-Einheit 1 entsprechend einem regelbaren Antrieb 26 wirkt.

Die Kolben-Zylinder-Einheit 1 umfaßt einen Stützkolben 7, der in einem Stützzylinder 5 durch kolben- und zylinderfeste Anschläge 27 und 28 begrenzt verschiebbar ist, und dessen durch eine konzentrisch angeordnete, vorgespannte Ausstoßfeder 29 bewirkte, rasche Ausfahrbewegung im Geschwindigkeitsverlauf durch ein Dämpfersystem 30 mit relativ temperaturunabhängigem Dämpferöl gesteuert wird. Der Stützkolben 7 weist entlang einer Mantellängsachse eine in Einfahrrichtung sperrende Sperrverzahnung 31 auf, mit der eine zwangsgesteuerte Sperrklinke 32 in Eingriff gebracht werden kann.

Mit dem Stützzylinder 7 steht ein Zylinder 33 der zusätzlichen Kolben-Zylinder-Einheit 25 in Verbindung. In diesem Zylinder 33 ist in Längsrichtung eine Hubspindel 34 gelagert, auf die ein durch einen Elektromotor 35 angetriebenes, nicht näher dargestelltes, selbsthemmendes Schneckengetriebe 36 wirkt, und auf der eine durch die Drehung der Hubspindel im Zylinder 33 längsverschiebbare Rillenmutter 37 läuft, mit der ein Antriebskolben 38 der zusätzlichen Kolben-Zylinder-Einheit 25 verbunden ist. Durch den Elektromotor 35 kann nun der Antriebskolben 38 im Zylinder 33 aus- und eingefahren werden. Er ist durch ein Verbindungsstück 39 mit dem Stützkolben 7 fest verbunden und bewegt diesen dadurch mit, wodurch der Überrollbügel 4 in mäßigem Tempo aufstellbar und wieder ablegbar ist. Durch die Selbsthemmung des Schneckengetriebes 36 und die Sperrwirkung der zwangsgesteuerten Sperrklinke 32 ist der Überrollbügel 4 in jeder Stellung arretiert. Damit der Antriebskolben 38 nach einem erfolgten Crash-Impuls vom Stützkolben 7 abkuppelbar ist, der danach in gewünschter Weise rasch ausfährt, ist zwischen dem Antriebskolben 38 und dem Verbindungsstück 39 mit dem Stützkolben 7 eine Crash-Kupplung 40 eingebaut, in der durch einen Crash-Impuls eine formschlüssige Verbindung zwischen Antriebskolben 38 und Verbindungsstück 39 elektromagnetisch lösbar ist.

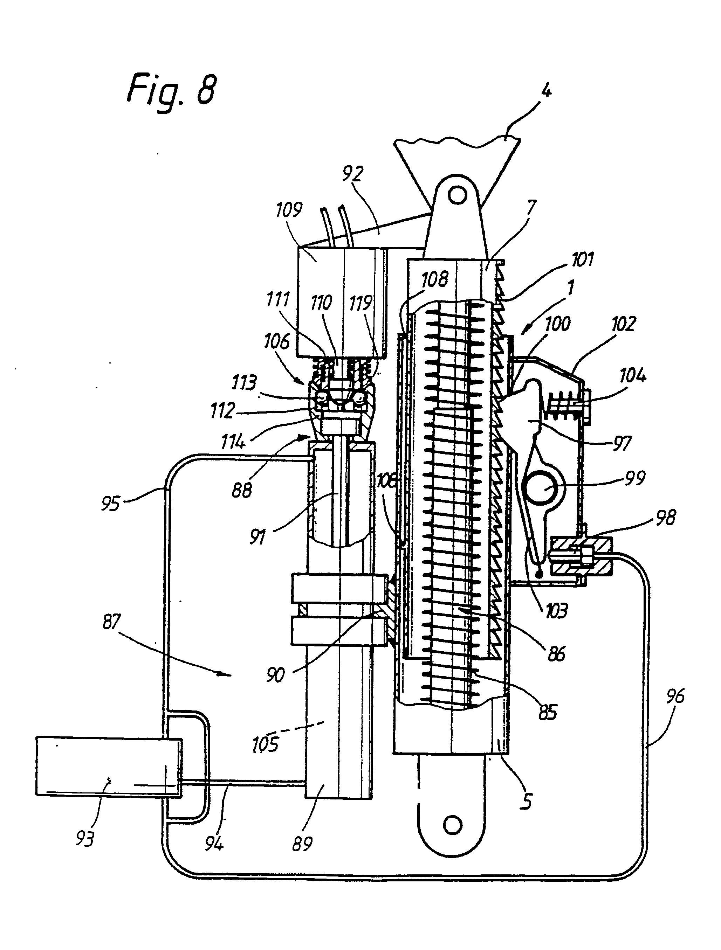

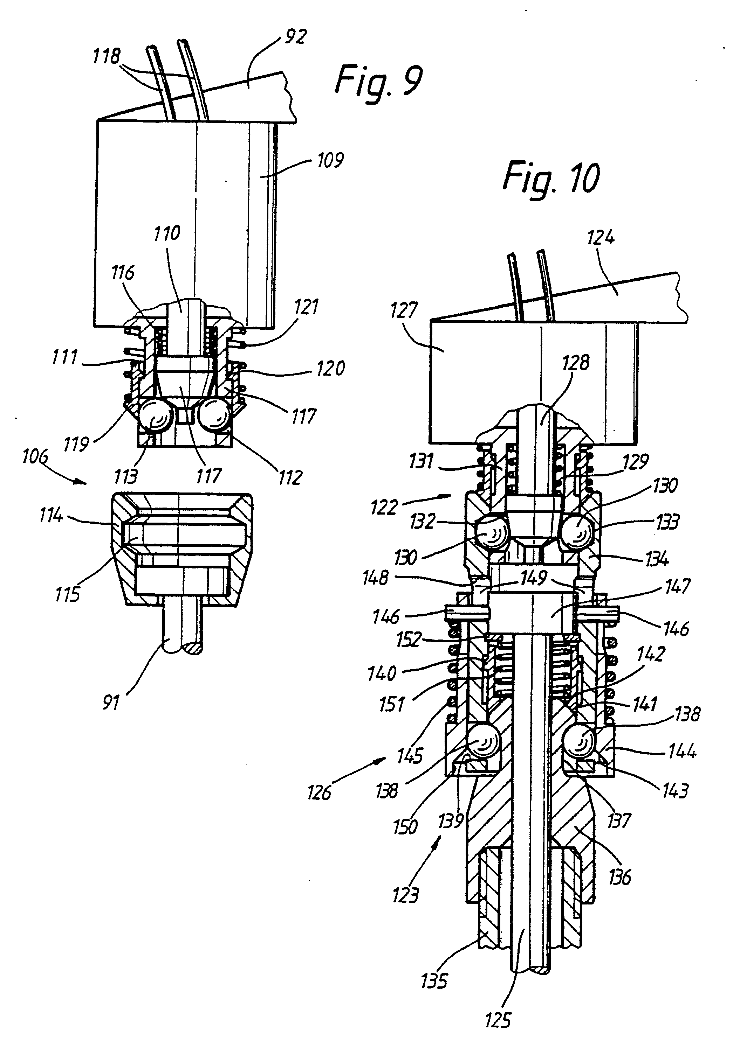

Der Aufbau und die Funktionsweise einer Crash-Kupplung wird im Beschreibungsteil der Figuren 8 und 9 beschrieben.

Nach einem Crash-Impuls muß der Stützkolben 7 für den Fall eines Fahrzeugüberschlages in jeder erreichten Aufstellposition gegen ein Einfahren verriegelbar sein. Dieser Vorgang wird hier mittels des, in einer am Stützzylinder 5 befestigten Führungshülse 41 begrenzt verschiebbaren Zylinders 33 der zusätzlichen Kolben-Zylinder-Einheit 25 zwangsgesteuert. Um diesen Zylinder 33 verläuft eine vorgespannte Druckfeder 42, die sich mit einem Ende an einem Steg 43 der Führungshülse 41 abstützt und mit dem anderen Ende auf einen Zylinderabsatz 44 drückt.

Am Zylinder 33 ist ein Hebel 45 schwenkbar befestigt, der mit seinem anderen Ende mit Abstand von deren Drehpunkt 46 an der federbelasteten Sperrklinke 32 angreift, und diese durch eine Bewegung in Richtung der Verzahnung von der Sperrverzahnung 31 abheben kann. Beim Einfahren des Stützkolbens 7 durch den Antriebskolben 38 kommt diese Bewegung deswegen zustande, weil die Vorspannung der Druckfeder 42 weitaus geringer ist als die Restvorspannung der Ausstoßfeder 29 bei voll ausgefahrenem Stützkolben 7, wodurch der Antriebskolben 38 beim Einfahren zuerst die Druckfeder 42 komprimiert und den Zylinder 33 mit einem Anschlagbord 47 gegen den Steg 43 der Führungshülse 41 zieht, wobei auch der Hebel 45 mitverschoben wird, der die Sperrklinke 32 außer Eingriff bringt. Sofort anschließend wird mit der weiteren Einfahrbewegung des Antriebskolbens 38 auch der Stützkolben 7 in den Stützzylinder 5 eingefahren und damit der Überrollbügel 4 abgelegt.

Bei einer durch den Antrieb gesteuerten Ausfahrbewegung der Kolben 7 und 38 wird durch die Vorspannkraft der Ausstoßfeder 29 die Druckfeder 42 komprimiert, wodurch durch die Bewegung des Zylinders 33 der Hebel 45 die Sperrklinke 32 ausrückt. Wird der Antrieb 26 angehalten, und wirkt eine äußere Kraft auf den Überrollbügel 4 ein, so wird dieser zwar ein kleines Stück eingeschoben, dabei wird aber die Ausstoßfeder 29 komprimiert und der Zylinder 33 mit dem Hebel 45 mitverschoben, wodurch die federbelastete Sperrklinke 32 in Eingriff mit der Sperrverzahnung 31 kommt, und den Überrollbügel 4 gegen weiteres Einklappen sperrt.

Nach einem Crash-Signal, durch das die Crash-Kupplung 40 gelöst und der Antrieb 26 unwirksam wird, fährt der Stützkolben 7 nur durch die Ausstoßfeder 29 angetrieben, rasch aus. Die Druckfeder 42 kann sich entspannen, drückt gegen den Zylinderabsatz 44 und verschiebt den Zylinder 33 mit dem Hebel 45 bis die Sperrklinke 32 eingerückt ist. Sie wird bei diesem schnellen Ausfahren des Stützkolbens 7 mit ihren Zähnen über die Sperrverzahnung 31 geführt und hakt in diese bei Belastung des Überrollbügels 4 in entgegengesetzter Richtung sofort ein, wodurch ein Einfahren des Stützkolbens 7 verhindert ist.

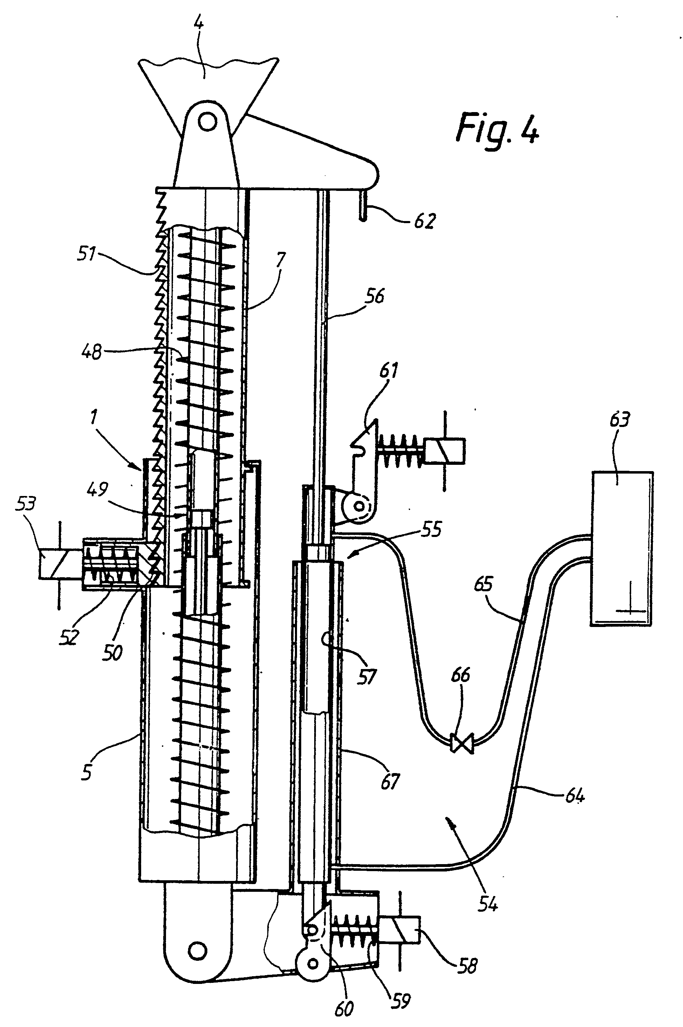

In Fig. 4 ist eine Ausführungsform dargestellt, in der eine einen Überrollbügel 4 bewegende Kolben-Zylinder-Einheit 1 wiederum einen Stützzylinder 5 und einen darin verschiebbaren Stützkolben 7 umfaßt, der durch eine Ausstoßfeder 48 ausgefahren wird und durch ein relativ temperaturunabhängiges Dämpfersystem 49 in seiner Geschwindigkeit geregelt ist. Entlang einer Mantellängsachse weist der Stützkolben 7 eine in Einfahrrichtung mit einem Sperrschieber 50 sperrend zusammenwirkende Sperrverzahnung 51 auf. Der Sperrschieber 50 wird durch eine Feder 52 eingefahren und durch einen Hubmagneten 53 während einer durch einen Antrieb 54 gesteuerten Bewegung ausgerückt. Als regelbarer Antrieb 54 ist eine zusätzliche, parallel angeordnete, hydraulische Kolben-Zylinder-Einheit 55 vorgesehen, deren Antriebskolben 56 fest über ein Zwischenstück mit dem Stützkolben 7 verbunden ist, und dessen Zylinder 57 über eine, durch einen Hubmagneten 58 ausrückbare und durch eine Druckfeder 59 einrückbare Klinke 60 mit dem Stützzylinder 5 lösbar zu verbinden ist.

Eine weitere feder- und hubmagnetgesteuerte Klinke 61 ist am Zylinder 57 befestigt und dient dazu, bei vollständig eingefahrenem Antriebskolben 56 durch Eingriff in einen mit diesem bewegbaren Bügel 62 den Antriebskolben 56 festzulegen, so daß sich dessen Position trotz abgeschalteter Hydraulik nicht verändert.

Der Antriebskolben 56, der hier als Differentialkolben ausgebildet ist, wird durch ein Hydraulikaggregat 63 bewegt, das über flexible Hydraulikleitungen 64 und 65 und eine eventuell dazwischengeschaltete Drossel 66 die Bewegungsrichtung und die Bewegung des Antriebskolbens 56 bestimmt.

In einer vereinfachten Ausführung kann ein Antriebskolben als einfach wirkender Hydraulikkolben ausgebildet sein, der durch die Wirkung eines Hydraulikaggregats eingefahren und durch die Wirkung einer weiteren Druckfeder ausgefahren wird.

Erfolgt ein Crash-Impuls, so zieht der Hubmagnet 58 die Klinke 60 zu sich und löst somit die Verbindung des Zylinders 57 zum Stützzylinder 5. Sofort wird der Stützkolben 7 durch die Wirkung der Ausstoßfeder 48 schnell ausgefahren und der Überrollbügel 4 aufgestellt. Dabei wird der Zylinder 57, der in einer Führungshülse 67 geführt ist, mitgezogen, Zur Regenerierung des Antriebs 54 wird der Zylinder 57 mit Öldruck beaufschlagt, der dadurch in der Führungshülse 67 zurück bis zur Verriegelung durch die Klinke 60 gedrückt wird, deren Hubmagnet 58 stromlos geschaltet ist.

Durch den Crash-Impuls wird der Hubmagnet 58 stromlos, und der Sperrschieber 50 durch die Feder 52 in Eingriff gebracht, der während der schnellen Ausfahrbewegung über die Sperrverzahnung 51 rutscht und bei Belastung des Überrollbügels 4 in Einfahrrichtung den Stützkolben 7 sofort abstützt. Durch den hydraulischen Antrieb 54 allein könnte die geforderte, schnelle Ausfahrbewegung nach einem Crash-Impuls nur bedingt erreicht werden, da die Viskosität des fahrzeugüblichen Hydrauliköls, durch das das Hydraulikaggregat 63 noch weitere Funktionen im Fahrzeug steuert, zu temperaturabhängig ist, wodurch die notwendige Aufstellgeschwindigkeit des Überrollbügels 4 nicht gewährleistet wäre.

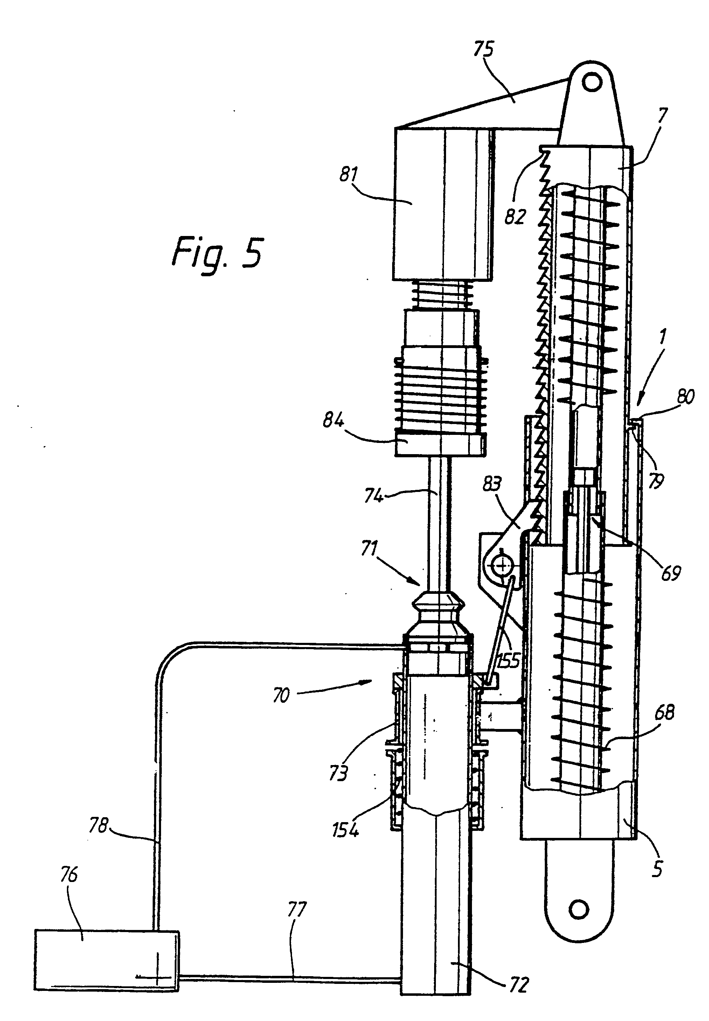

In Fig. 5 umfaßt eine Kolben-Zylinder-Einheit 1 einen Stützzylinder 5 und einen darin verschiebbar geführten Stützkolben 7, der durch eine Ausstoßfeder 68 schnell ausfahrbar ist und dessen Ausfahrgeschwindigkeit dabei durch ein relativ temperaturunabhängiges Dämpfersystem 69 steuerbar ist.

Als regelbarer Antrieb 70 wirkt eine zusätzliche, parallel dazu angeordnete, hydraulische Kolben-Zylinder-Einheit 71, deren Zylinder 72 in einer am Stützzylinder 5 befestigten Führungshülse 73 gelagert ist, und deren Antriebskolben 74 über ein Verbindungsstück 75 mit dem Stützkolben 7 verbunden ist.

Durch ein Hydraulikaggregat 76 wird der Antriebskolben 74 über zwei Hydraulikleitungen 77 und 78 in zwei entgegengesetzte Richtungen mit Drucköl geregelt beaufschlagt, wobei durch das Verbindungsstück 75 auch der Stützkolben 7 mit der gleichen Geschwindigkeit wie der Antriebskolben 74 aus- und wieder einfährt, und diese Ausfahrbewegung durch die kolben- und zylinderfesten Anschläge 79 und 80 begrenzt ist.

Damit der Antriebskolben 74 nach einem erfolgten Crash-Impuls vom Stützkolben 7 abkuppelbar ist, der danach rasch ausfährt, ist zwischen dem Verbindungsstück 75 und dem Antriebskolben 74 eine Crash-Kupplung 81 eingebaut, in der durch einen Crash-Impuls eine formschlüssige Verbindung zwischen Antriebskolben 74 und Verbindungsstück 75 elektromagnetisch lösbar ist.

Der Aufbau und die Funktion einer Crash-Kupplung ist im Beschreibungsteil der Figuren 8 und 9 beschrieben.

Nach einem Crash-Impuls muß der Stützkolben 7 für den Fall eines Fahrzeugüberschlags in jeder erreichten Aufstellposition gegen Einfahren infolge Krafteinwirkung von außen verriegelbar sein. Dazu weist der Stützkolben 7 entlang einer Mantellinie eine in Einfahrrichtung sperrende Sperrverzahnung 82 auf, mit der eine steuerbare, federbelastete Sperrklinke 83 in Eingriff gebracht werden kann.

Die Steuerung dieses Vorganges mittels einer Druckfeder 154 und eines die Sperrklinke 83 bewegenden Hebels 155 ist bereits in der Beschreibung von Fig. 3 näher erläutert.

Damit der hydraulische Antriebskolben 74 in seiner vollständig eingefahrenen Position fixiert ist, ist am oberen Ende des Zylinders 72 ein hydraulisch gesteuertes, mechanisch verriegelndes Rastschloß 84 vorgesehen, durch das der eingefahrene Antriebskolben 74 formschlüssig am Zylinder 72 gehalten wird und trotz abgeschalteten Hyraulikaggregats 76 kein Kriechen, z.B. infolge von Lecköldurchtritt zwischen Antriebskolben 74 und Zylinder 72, auftreten kann.

Der Aufbau und die Funktion einer derartigen Verriegelung ist im Beschreibungsteil der Fig. 10 beschrieben.

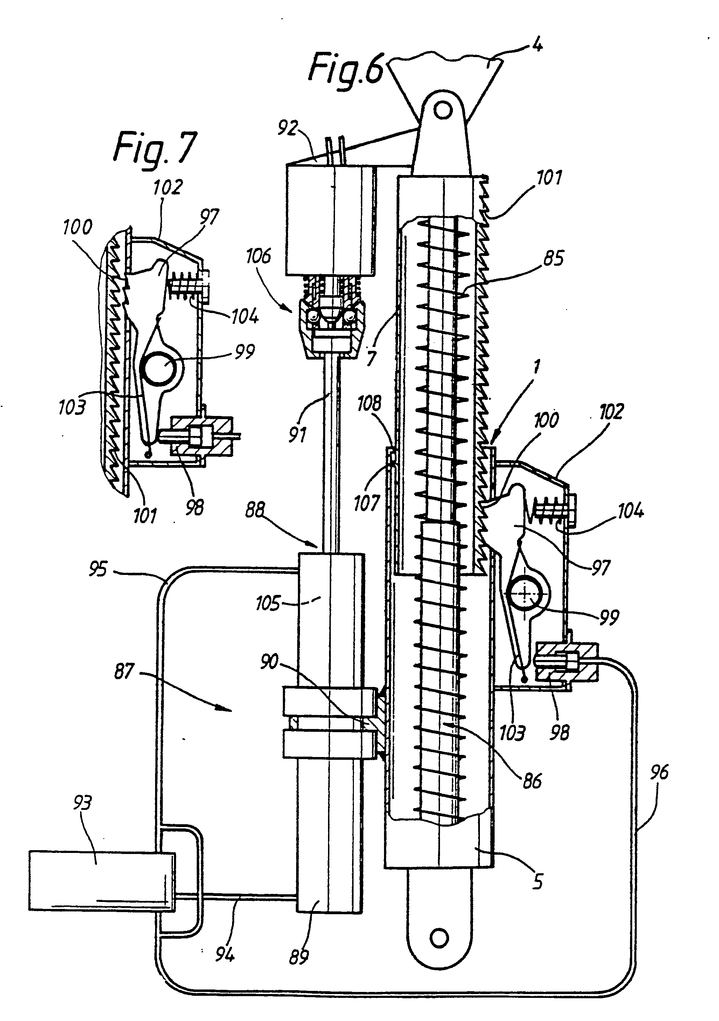

Die Figuren 6 und 8 zeigen eine weitere Ausführungsform der Antriebsvorrichtung, einmal in einer ausgefahrenen Stellung, in der ein Überrollbügel 4 in Stützposition aufgestellt ist und weiterhin in einer eingefahrenen Stellung, in der der Überrollbügel 4 heruntergeklappt liegt. Eine Kolben-Zylinder-Einheit 1 umfaßt einen Stützzylinder 5 und einen darin verschiebbar geführten Stützkolben 7, der durch eine Ausstoßfeder 85 schnell ausfahrbar ist und dessen Ausfahrgeschwindigkeit dabei durch ein relativ temperaturunabhängiges Dämpfersystem 86 gesteuert ist.

Als regelbarer Antrieb 87 wirkt eine zusätzliche, parallel dazu angeordnete, hydraulische, doppeltwirkende Kolben-Zylinder-Einheit 88, deren Zylinder 89 elastisch an einer Konsole 90 des Stützzylinders 5 befestigt und deren Antriebskolben 91 über ein Verbindungsstück 92 mit dem Stützkolben 7 verbunden ist.

Durch ein Hydraulikaggregat 93 wird der Antriebskolben 91 über zwei Hydraulikleitungen 94 und 95 in zwei entgegengesetzte Richtungen mit Drucköl geregelt beaufschlagt, wobei durch die Verbindung auch der Stützkolben 7 mit der gleichen Geschwindigkeit wie der Antriebskolben 91 aus- und wieder einfährt.

Ebenfalls über eine hydraulische Steuerleitung 96 wird durch das Hydraulikaggregat 93 eine Sperrklinke 97 betätigt, die, wie in Fig. 7 näher dargestellt, durch die Wirkung eines hydraulischen Druckzylinders 98 um einen Lagerbolzen 99 schwenkbar ist, wobei ihre Verzahnung 100 von einer Sperrverzahnung 101 abhebt, die entlang einer Mantellängsachse des Stützkolbens 7 eingeformt ist. In die Sperrverzahnung 101 wird die Sperrklinke 97 durch die Wirkung zweier, sich an einem zylinderfesten Halteteil 102 abstützender Federn 103 und 104 gedrückt, wonach sie ein Einfahren des Stützkolbens 7 verhindert.

Damit der hydraulische Antriebskolben 91 in seiner vollständig eingefahrenen Position gegen eine kriechende, selbsttätige Ausfahrbewegung bei drucklos geschalteten Hydraulikleitungen 94, 95 fixiert ist, kann in diesem Zylinder 89 ebenfalls ein Rastschloß 105 vorgesehen sein, das in einer Ausführung entsprechend der in Fig. 9 vorstellbar wäre.

Bei einer langsamen Ein- und Ausfahrbewegung der Kolben 7 und 91, einer sogenannten "Komfort-Betätigung" des Überrollbügels 4, während der die Bewegung des Überrollbügels 4 bei Bedarf auch problemlos durch eine entsprechende Ansteuerung des Antriebskolbens 91 anzuhalten oder umzukehren ist, ist die Sperrklinke 97 durch die Wirkung des Druckzylinders 98 aus Verschleiß- und Geräuschgründen außer Eingriff gesetzt.

Erfolgt nun ein Crash-Impuls, so trennt eine das Verbindungsstück 92 mit dem Antriebskolben 91 kuppelnde Crash-Kupplung 106 diese Verbindung sofort, wonach die Ausstoßfeder 85 nun unabhängig vom Antrieb 87 den Stützkolben 7 bis zur Begrenzung durch kolben- und zylinder feste Anschläge 107 und 108 rasch ausfährt und den Überrollbügel 4 aufstellt. Dabei sind die Hydraulikleitungen 95 und 96, die unmittelbar miteinander verbunden sind, drucklos geschaltet, so daß die Sperrklinke 97 durch die Federn 103 und 104 angedrückt – über die Sperrverzahnung 101 läuft und bei einer Belastung des Überrollbügels 4 durch eine daran angreifende Kraft in Einfahrrichtung in die Sperrverzahnung 101 eingreift, eine Einfahrbewegung des Stützkolbens 7 verhindert und den Überrollbügel 4 damit abstützt. Die günstig gewählte Form der Verzahnung 100 der Sperrklinke 97 und der der Sperrverzahnung 101 führt dazu, daß deren Sperrwirkung durch Druck auf den Überrollbügel 4 noch verstärkt wird.

Eine Crash-Kupplung soll nun entsprechend der Ausbildungsform in Figur 8 und vergrößert dargestellt in Fig. 9 beschrieben werden.

Die Crash-Kupplung 106 dient dazu, ein am Stützkolben 7 angebrachtes Verbindungsstück 92 mit dem Antriebskolben 91 lösbar zu verbinden. An das Verbindungsstück 92 schließt ein zum Öffnen der Crash-Kupplung 106 dienender Elktromagnet 109 an, durch den ein Sperrbolzen 110 bewegt wird, der zur Ver- und Entriegelung der Verbindung dient. Koaxial um den Sperrbolzen 110 am Elektromagneten 109 ebenfalls angebracht ist eine Hülse 111, welche Wandbohrungen 112 aufweist, in die durch den Sperrbolzen 110 innenliegende Sperrkugeln 113 gedrückt werden können, bis sie über den Umfang der Hülse 111 hinausragen.

Der Antriebskolben 91 geht an seinem zu verbindenden Ende in einen Buchsenkörper 114 über, mit dem er die Hülse 111 in der vorgesehenen Verbindungslage umgreift, und weist eine innere Ringnut 115 auf, in die die über den Hülsenumfang hinausragenden Sperrkugeln 113 hineinpassen und dabei die Hülse 111 mit dem Buchsenkörper 114 formschlüssig verbinden. In die Ringnut 115 verschoben werden die Sperrkugeln 113 dadurch, daß der Sperrbolzen 110 durch eine Spannfeder 116 in eine vorgeschobene Lage gebracht wird, in der er durch einen angeformten Konus 117 die Sperrkugeln 113 durch die Wandbohrungen 112 drückt.

Bei einem Crash-Impuls wird der Elektromagnet 109 über die Kabel 118 mit Strom versorgt und baut ein elektromagnetisches Feld auf, durch das der Sperrbolzen 110 gegen die Federkraft der Spannfeder 116 in eine zurückgezogene Lage gebracht wird, wodurch die Sperrkugeln 113 durch den durch die Ausstoßfeder 85 bewirkten Zug an der Hülse 111 aus der Ringnut 115 in das Innere der Hülse 111 geführt werden und den Formschluß zum Buchsenkörper 114 lösen. Dabei folgt der Abziehbewegung des Buchsenkörpers 114 ein Sperrschieber 119, der, durch einen Anschlag 120 begrenzt, durch eine koaxial um die Hülse 111 angeordnete Feder 121 in Richtung des Buchsenkörpers 114 gedrückt wird und die Wandbohrungen 112 gegen ein Herausfallen der Sperrkugeln 113 verschließt.

Nachdem das magnetische Feld wieder aufgehoben ist, wird der Sperrbolzen 110 durch die Spannfeder 116 vorgeschoben und gegen die seinen Weg blockierenden Sperrkugeln 113 gedrückt, deren Weg durch den Sperrschieber 119 begrenzt ist. Die Crash-Kupplung 106 ist dadurch für die Regenerierung der Verbindung vorgespannt. Für eine erneute Verbindung wird der Antriebskolben 91 mit dem Buchsenkörper 114 gegen den Sperrschieber 119 gefahren, der dann gegen die Kraft der Feder 121 zurückgeschoben wird, wonach die Sperrkugeln 113 nach einer erreichten Überdeckung der Ringnut 115 mit den Wandbohrungen 112 mittels des durch die Spannfeder 116 beaufschlagten Sperrbolzens 110 in die Ringnut 115 gedrückt werden und erneut eine formschlüssige Verbindung zwischen dem Antriebskolben 91 und dem Verbindungsstück 92 bzw. dem Stützkolben 7 herstellen.

In Fig. 10 ist eine Crash-Kupplung 122 zusammen mit einem Rastschloß 123 dargestellt.

Die Crash-Kupplung 122 stellt eine lösbare Verbindung zwischen einem am Stützkolben 7 befestigten Verbindungsstück 124 und einem als regelbarer Antrieb 153 dienenden Antriebskolben 125 einer zusätzlichen Kolben-Zylinder-Einheit 126 her.

Am Verbindungsstück 124 ist ein Elektromagnet 127 und ein längsverschiebarer, federbelasteter Sperrbolzen 128 gelagert. Der Sperrbolzen 128 wird durch eine Spannfeder 129 gegen Sperrkugeln 130 gedrückt, die in einer an den Elektromagneten 127 anschließenden Hülse 131 in Wandbohrungen 132 gelagert sind, und die bei einem Übereinandertreffen der Wandbohrungen 132 mit einer inneren Ringnut 133 eines am Antriebskolben 125 gelagerten Buchsenkörpers 134, der die Hülse 131 in der vorgesehenen Verbindungslage übergreift, durch den Sperrbolzen 128 auch in die Ringnut 133 gedrückt werden und den Buchsenkörper 134 an der Hülse 131 festlegen. Weitere Einzelheiten des Aufbaus und der Funktionsweise einer derartigen Crash-Kupplung sind im Beschreibungsteil zur Figur 9 genannt. Der Buchsenkörper 134 dient hier darüber hinaus dazu, den ihn lagernden Antriebskolben 125 eingefahren in seinem Hydraulik zylinder 135 zu verriegeln. Er ist Bestandteil des Rastschlosses 123 und übergreift mit einem Ende, bei eingefahrenem Antriebskolben 125 eine am Zylinder 135 befestigte, koaxial um den Antriebskolben 125 angeordnete Hülse 136, die eine am Umfang eingeformte Ringnut 137 aufweist, in die bei der Verriegelung Sperrkugeln 138 zu liegen kommen, die in Wandbohrungen 139 des Buchsenkörpers 134 gelagert sind.

Die Verriegelung durch das Rastschloß 123 erfolgt derart, daß ein im Buchsenkörper 134 durch einen Anschlag 140 begrenzt verschiebbarer Sperrschieber 141, der die Sperrkugeln 138 daran hindert in den Hohlraum des Buchsenkörpers 134 zu fallen, durch einen beim Einfahren des Antriebskolbens 125 in den Zylinder 135 gegen ihn drückenden Konus 142 der Hülse 136 axial verschoben wird, wobei ihm die Hülse 136 in den Buchsenkörper 134 folgt, bis die Ringnut 137 mit dessen Wandbohrungen 139 in Überdeckung kommt. Sofort werden dann die durch einen inneren Konus 143 einer den Buchsenkörper 134 koaxial umgebenden Sperrschieberhülse 144 beaufschlagten Sperrkugeln 138 in die Ringnut 137 gedrückt, die mit etwa halbem Eingriff in den Wandbohrungen 139 und mit der anderen Hälfte in der Ringnut 137 die formschlüssige Verriegelung des Buchsenkörpers 134 an der Hülse 136 fixieren.

Die Sperrschieberhülse 144 ist dabei durch eine vorgespannte Druckfeder 145 kraftbeaufschlagt, die sich an radial auskragenden, bolzenförmigen Fortsätzen 146 eines auf das Kolbenstangenende aufgesetzten Kopfstückes 147 abstützt.

Bei Beginn der Ausfahrbewegung des Antriebskolbens 125 ziehen die Fortsätze 146 die Sperrschieberhülse 144 mit sich, bis die Fortsätze 146 selbst an einem Endanschlag 148 eines jeweiligen Führungsschlitzes 149 des Buchsenkörpers 134 zur Anlage kommen. Dabei wird für die Sperrkugeln 138, der Weg aus der Ringnut 137 frei, die dann teilweise in eine Aussparung 150 der Sperrschieberhülse 144 zu liegen kommen, wobei sie die Verbindung zwischen Hülse 136 und Buchsenkörper 134 auflösen.

Der Sperrschieber 141 folgt aufgrund einer ihn in dieser Richtung beaufschlagenden Feder 151 der Hülse 136 und verhindert ein Herausfallen der Sperrkugeln 138 aus den Wandbohrungen 139.

Das Kopfstück 147 wird nach dem Lösen der Verriegelung im Rastschloß 123 durch den auf das Verbindungsstück 124 wirkenden Zug durch die stark vorgespannte Ausstoßfeder im Stützzylinder zurückverschoben und liegt an einem buchsenkörperfesten Stützring 152 an. Dabei drückt es über die Fortsätze 146 auch die Druckfeder 145 zusammen, die die Sperrschieberhülse 144 mit ihrem Konus 143 gegen die Sperrkugeln 138 drückt, wodurch das Rastschloß 123 für einen erneuten Verriegelungsvorgang vorgespannt liegt.

Die Anordnung eines derartigen Rastschlosses oder auch eines Rastschlosses entsprechend der Ausführung der Crash-Kupplung ist ebenfalls innerhalb des Zylinders, z.B. im Bereich des Zylinderbodens vorstellbar.

Zur Anordnung der Antriebsvorrichtung am Überrollbügel ist zu bemerken, daß es vorteilhaft ist, von beiden Fahrzeugseiten aus am Überrollbügel eine stützende Kolben-Zylinder-Einheit angreifen zu lassen während es ausreichend ist, nur eine dieser Kolben-Zylinder-Einheiten mit einem regelbaren Antrieb lösbar zu kuppeln.

## Ansprüche

1. Antriebsvorrichtung für einen Überrollbügel von Kraftwagen, welche mindestens eine den Überrollbügel ausfahrende Kolben-Zylinder-Einheit umfaßt, durch die dieser bei einem durch eine Crashsituation ausgelösten Steuerimpuls aus einer abgesenkten Ruhelage in eine aufgestellte Stützlage überführbar ist, indem der Stützkolben nach einem gesteuerten Lösen einer Verriegelung durch die Wirkung einer Ausstoßfeder aus seinem Führungszylinder ausfahrbar und in der ausgefahrenen Endlage erneut verriegelbar ist, **dadurch gekennzeichnet,** daß mindestens eine Koben-Zylinder-Einheit (1) mittels eines zusätzlichen Antriebs (19 bzw. 26 bzw. 54 bzw. 70 bzw. 87), der hinsichtlich der Bewegungsrichtung und der Geschwindigkeit des federbelasteten Stützkolbens (7) willkürlich steuerbar ist, verstellt werden kann, und daß der Einfluß des zusätzlichen Antriebs (19 bzw. 26 bzw. 54 bzw. 70 bzw. 87) auf den federbelasteten Stützkolben (7) bei Vorliegen eines Crashsignals aufhebbar ist.

2. Antriebsvorrichtung nach Anspruch 1, **dadurch gekennzeichnet,** daß der Stützkolben (7) in jeder Ausfahrposition gegen eine Einfahrbewegung verriegelbar ist.

3. Antriebsvorrichtung nach Anspruch 2, **dadurch gekennzeichnet,** daß am Stützkolben (7) entlang einer Mantellängsachse eine gegen ein Einfahren wirkende Sperrverzahnung (15 ; 31 ; 51 ; 82 ; 101) eingeformt ist, mit der ein steuerbares Sperrelement (11 ; 32 ; 50 ; 83 ; 97) in Eingriff bringbar ist.

4. Antriebsvorrichtung nach Anspruch 1, **dadurch gekennzeichnet,** daß ein elektromotorisch angetriebenes, selbsthemmendes Getriebe (21) über ein Abtriebsritzel (22) mit einer in Längsrichtung entlang einer Mantellängsachse verlaufenden Evolventenverzahnung (32) des Stützkolbens (37) in Eingriff steht, und daß das Abtriebsritzel (22) durch eine Kupplung (24) vom Antrieb (19) abkuppelbar ist.

5. Antriebsvorrichtung nach Anspruch 1, **dadurch gekennzeichnet,** daß der Antrieb (26 ; 54 ; 70 ; 87 ; 153) durch eine regelbare zusätzliche Kolben-Zylinder-Einheit (25 ; 55 ; 71 ; 88 ; 126) gebildet ist.

6. Antriebsvorrichtung nach Anspruch 5, **dadurch gekennzeichnet,** daß der Antriebskolben (38 ; 74 ; 91 ; 125) der zusätzlichen Kolben-Zylinder-Einheit (25 ; 71 ; 88 ; 126) mit dem Stützkolben (7) über eine Crash-Kupplung (40 ; 81 ; 106 ; 122) lösbar verbunden ist.

7. Antriebsvorrichtung nach Anspruch 5, **dadurch gekennzeichnet,** daß die zusätzliche Kolben-Zylinder-Einheit (55 ; 71 ; 88 ; 126) einen doppelt-wirkenden Hydraulikzylinder (57 ; 72 ; 89 ; 135) aufweist, durch den die Geschwindigkeit des Antriebskolbens (56 ; 74 ; 91 ; 125) in Aus- und Einfahrrichtung hydraulisch regelbar ist.

8. Antriebsvorrichtung nach Anspruch 5, **dadurch gekennzeichnet,** daß im Zylinder (33) in Längsrichtung eine Hubspindel (34) gelagert ist, auf die ein elektromotorisch angetriebenes, selbsthemmendes Schneckengetriebe (36) wirkt, und auf der eine durch die Drehung der Hubspindel (34) im Zylinder (33) längsverschiebbare Rillenmutter (37) angeordnet ist, durch die der Antriebskolben (38) bewegbar ist.

9. Antriebsvorrichtung nach Anspruch 5, **dadurch gekennzeichnet,** daß die zusätzliche Kolben-Zylinder-Einheit (55) mit ihrem Antriebskolben (56) am Stützkolben (7) befestigt ist und mit ihrem Zylinder (57) am Stützzylinder (5) über eine Klinke (60) verriegelbar ist, die aufgrund eines Crash-Impulses aus ihrer Verriegelungsstellung bewegbar ist und dadurch den Zylinder (57) freigibt, der in einer zum Stützzylinder (5) parallelen Führungshülse (67) entsprechend dem Gesamthub des Stützkolbens (7) mitverschiebbar ist.

10. Antriebsvorrichtung nach Anspruch 3, **dadurch gekennzeichnet,** daß das Sperrelement durch einen Sperrschieber (11 ; 50) gebildet ist, der während des Bewegens des Stützkolbens (7) durch den Antrieb (19 ; 54) durch einen Hubmagneten (12, 53) außer Eingriff mit der Sperrverzahnung (15 ; 51) bringbar ist, und der bei einem Crash-Impuls und dadurch stromlos geschaltetem Hubmagneten (12 ; 53) durch eine Feder (13 ; 52) in Wirkposition verschiebbar ist.

11. Antriebsvorrichtung nach Anspruch 3, **dadurch gekennzeichnet,** daß das Sperrelement durch eine Sperrklinke (32 ; 83 ; 97) gebildet ist, die bei einem Crash-Impuls in die Sperrverzahnung (31 ; 82 ; 101) eingerückt ist, und die durch das geregelte Bewegen des Antriebskolbens (38 ; 74 ; 91) während dieser Bewegung mittels einer davon abhängigen Zwangssteuerung ausrückbar ist.

12. Antriebsvorrichtung nach Anspruch 11, **dadurch gekennzeichnet,** daß der Zylinder (33 ; 72) der zusätzlichen Kolben-Zylinder-Einheit (25 ; 71) in einer Führungshülse (41 ; 73), die einen Steuerhub zuläßt, begrenzt verschiebbar am Stützzylinder (5) gelagert ist, und daß mit je einem Ende eine Druckfeder (42 ; 154) am Zylinder (33 ; 72) und der Führungshülse (41 ; 73) abgestützt ist, die eine geringere Federvorspannung als die am Stützkolben (7) wirkende Ausstoßfeder (29 ; 68) in entspanntem Zustand aufweist, und die beim Bewegen des Antriebskolbens (38 ; 74) komprimiert wird, wobei auch der Zylinder (33 ; 72) verschoben wird, der dabei einen Hebel (45 ; 155) mit sich zieht, der die Sperrklinke (32 ; 83) von der Sperrverzahnung (31 ; 82) abhebt.

13. Antriebsvorrichtung nach Anspruch 11, **dadurch gekennzeichnet,** daß die Sperrklinke (97) durch einen gegen Federn (103 und 104) wirkenden, hydraulisch betätigten Druckzylinder (98) ausrückbar ist, dessen Steuerleitung (96) in direkter Wirkverbindung mit einer Hydraulikleitung (95) des doppeltwirkenden Zylinders (89) der zusätzlichen Kolben-Zylinder-Einheit (88) steht, wodurch der Druckzylinder (98) beim Bewegen des Antriebskolbens (91) mit Drucköl beaufschlagt ist und die federbelastete Sperrklinke (97) von der Sperrverzahnung (101) abhebt, und daß die Hydraulikleitungen (94 ; 95 ; 96) bei einem Crash-Impuls drucklos geschaltet sind, wodurch die Sperrklinke (97) eingerückt ist.

14. Antriebsvorrichtung nach Anspruch 6, **dadurch gekennzeichnet,** daß die Crash-Kupplung (106 ; 122) eine mit dem Antriebskolben (91 ; 125) bzw. mit dem Stützkolben (7) in fester Verbindung stehende Hülse (111 ; 131) aufweist, welche in eingekuppelter Stellung einen am anderen Bauteil (7 bzw. 91 ; 125) befestigten Buchsenkörper (114, 134) umgreift, wonach diese Überdeckung der Teile durch einen steuerbaren Sperrbolzen (110 ; 128) formschlüssig ver- und entriegelbar ist, der auf Sperrkugeln (113 ; 138) wirkt, die in verriegelnder Stellung in eine Ringnut (115 ; 133) des Buchsenkörpers (114 ; 134) und in Wandbohrungen (112 ; 132) der Hülse (111 ; 131) eingreifen.

15. Antriebsvorrichtung nach Anspruch 14, **dadurch gekennzeichnet,** daß der Sperrbolzen (110 ; 128) in seiner Verriegelungsrichtung durch eine vorgespannte Spannfeder (116 ; 129) beaufschlagt ist, wodurch er die Überdeckung der Hülse (111 ; 131) mit dem Buchsenkörper (114 ; 134) nach deren Einkuppeln selbsttätig sperrend festlegt.

16. Antriebsvorrichtung nach Anspruch 9, dadurch gekennzeichnet, daß der Antriebskolben (56) in eingefahrener Stellung und bei abgesenkter Ruhelage des Überrollbügels (4) mit seinem Zylinder (57) über eine zylinderfeste, elektromagnetisch betätigte Klinke (61), die in einen mit dem Antriebskolben (56) verbundenen Bügel (62) einrastet, lösbar verriegelbar ist.

17. Antriebsvorrichtung nach einem oder mehreren der vorhergehenden Ansprüche, dadurch gekennzeichnet, daß der Antriebskolben (74 ; 125) der zusätzlichen Kolben-Zylinder-Einheit (71 ; 126) in eingefahrener Stellung und bei abgesenkter Ruhelage des Überrollbügels (4) in seinem Hydraulikzylinder (72 ; 135) gegen eine ausfahrende Kriechbewegung durch ein Rastschloß (84 ; 123) verriegelbar ist.

18. Antriebsvorrichtung nach Anspruch 17, dadurch gekennzeichnet, daß das Rastschloß (123) eine mit dem Antriebskolben (125) in Verbindung stehende Sperrschieberhülse (144) umfaßt, die in dessen eingefahrener Stellung dem Antriebskolben (125) zugeordnete Sperrkugeln (138) in eine Ringnut (137) des Hydraulikzylinders (135) drückt, und damit diese Stellung formschlüssig festlegt, und die mit der Ausfahrbewegung des Antriebskolbens (125) gegenüber dem Zylinder (135) begrenzt verschiebbar ist und durch diesen Steuerhub den Weg für die Sperrkugeln (138) aus der Ringnut (137) freigibt.

19. Antriebsvorrichtung nach Anspruch 18, dadurch gekennzeichnet, daß die Sperrschieberhülse (144) in ihrer Verriegelungsrichtung durch eine vorgespannte Druckfeder (145) beaufschlagt ist, und daß sie nach Einfahren des Antriebskolbens (125) in den Zylinder (135) die Lage des Antriebskolbens (125) selbsttätig verriegelt.

20. Antriebsvorrichtung nach den Ansprüchen 6 und 17, dadurch gekennzeichnet, daß dem Antriebskolben (125) zugeordnete Bauteile (134) der Crash-Kupplung (122) und des Rastschlosses (123) einstückig ausgebildet sind.

21. Antriebsvorrichtung nach mindestens einem der Ansprüche 3 oder 17, dadurch gekennzeichnet, daß das steuerbare Sperrelement (97) und/oder das Rastschloß (84 ; 123) in direkter Abhängigkeit von der Druckbeaufschlagung des hydraulischen Antriebskolbens (91 ; 125) betätigbar ist.

## Claims

1. A driving arrangement for a roll over bar of a vehicle, which comprises at least one piston cylinder unit which drives out the roll over bar, by means of which unit the roll over bar, on a control impetus resulting from a crash situation, can be moved from a drawn down rest position into a set up supporting position, while the supporting piston, after a controlled release of a bolting arrangement, as a result of the action of an ejection spring, can be driven out of its guiding cylinder and can be again bolted in the telescoped out end position, characterized in that at least one piston cylinder unit (1) can be adjusted by means of an additional drive (19 or 26 or 54 or 70 or 87), which is controllable at will in terms of the direction of motion and of the speed of the spring-loaded supporting piston (7), and in that the influence of the additional drive (19 or 26 or 54 or 70 or 87) on the spring-loaded supporting piston (7) can be removed when a crash signal is present.

2. A driving arrangement according to claim 1, characterized in that the supporting piston (7) is lockable in every telescoped out position against an in-driven position.

3. A driving arrangement according to claim 2, characterized in that, on the supporting piston (7) along a shell longitudinal axis a locking toothing arrangement (15 ; 31 ; 51 ; 82 ; 101) is moulded on to act against a retraction, and by means of which a controllable locking element (11 ; 32 ; 50 ; 83 ; 97) can be brought into engagement.

4. A driving arrangement according to claim 1, characterized in that self-locking gearing (21) driven by an electric motor is in engagement by means of a driven pinion (22) with an involute tootling (32) of the support piston (37) extending in longitudinal direction along a shell longitudinal axis, and in that the driven pinion (22) can be disengaged from the drive (19) by means of a clutch (24).

5. A driving arrangement according to claim 1, characterized in that the drive (26 ; 54 ; 70 ; 87 ; 153) is constituted by an additional regulable piston cylinder unit (25 ; 55 ; 71 ; 88 ; 126).

6. A driving arrangement according to claim 5, characterized in that the drive piston (38 ; 74 ; 91 ; 125) of the additional piston cylinder unit (25 ; 71 ; 88 ; 126) is detachably connected with the support piston (7) by means of a crash coupling (40 ; 81 ; 106 ; 122).

7. A driving arrangement according to claim 5, characterized in that the additional piston cylinder unit (55 ; 71 ; 88 ; 126) has a double-acting hydraulic cylinder (57 ; 72 ; 89 ; 135) by means of which the speed of the drive piston (56 ; 74 ; 91 ; 125) in the outwards and inwards direction is hydraulically regulable.

8. A driving arrangement according to claim 5, characterized in that, housed in the cylinder (33) in the longitudinal direction is a lifting spindle (34) on witch a self-locking worm gear (36) acts driven by an electric motor, and on which a gooved nut (37) is mounted able to be longitudinally displaced by the rotation of the lifting spindle (34) in the cylinder (33), by means of which the drive piston (38) can be moved.

9. A driving arrangement according to claim 5, characterized in that the additional piston cylinder unit (55) is secured by means of its drive piston (56) to the supporting piston (7), and by means of its cylinder (57) is regulable on the supporting cylinder (5) by means of a catch (60) which, further to a crash impetus is movable out of its locking position, which cylinder can be moved along with it in a guiding bush (67) parallel with the supporting cylinder (5) correspondingly to the total stroke of the supporting piston (7).

10. A driving arrangement according to claim 3, characterized in that the locking member is constituted by a locking slide (11 ; 50) which, during the movement of the supporting piston (7) by the drive (19 ; 54) can be brought out of engagement with the locking toothing arrangement (15 ; 51) by means of a lifting magnet (12, 53), and witch, when a crash impetus occurs and thereby the lifting magnet (12, 53) receives no current, can be moved into operating position by means of a spring (13 ; 52).

11. A driving arrangement according to claim 5, characterized in that the locking member is constituted by a locking catch (32 ; 83 ; 97) which, on a crash impetus, is pushed into the locking toothing arrangement (31 ;82 ; 101) and which can be removed out of the latter by the regulated movement of the drive piston (38 ; 74 ; 91) during this movement by means of a positive control dependent thereon.

12. A driving arrangement according to claim 11, characterized in that the cylinder (33 ; 72) of the additional piston cylinder unit (25 ; 71) is mounted in a guide bush (41 ; 73) permitting a control stroke, limitedly slidably on the support cylinder (5), and in that with each end respectively a compression spring (42 ; 154) acts on the cylinder (33 ; 72) and the guide bush (41 ; 73), said spring having smaller tension than the pushing-out spring (29 ; 68) acting on the support (7) in the released state, and being compressed on the movement of the drive piston (38 ; 74), when also the cylinder (33 ; 72) is compressed pulling with it at the same time a lever (45 ; 155) which lifts the locking catch (32 ; 83) off the locking toothing arrangement (31 ; 82).

13. A driving arrangement according to claim 11, characterized in that the locking catch (97) can be disengaged by means of a hydraulically actuated pressure cylinder (98) operating against springs (103 and 104), the control duct of which (96) is in direct operating connection with a hydraulic duct (95) of the double-acting cylinder (89) of the additional piston-cylinder unit (88), as a result of which the pressure cylinder (98), on the movement of the drive piston (91) is impinged with pressure oil and the spring-loaded locking catch (97) lifts off the locking toothing arrangement (101), and in that the hydraulic ducts (94 ; 95 ; 96) receive no pressure on a crash impetus, as a result of which the locking catch (97) is retracted.

14. A driving arrangement according to claim 6, characterized in that the crash coupling (106 ; 122) has a sleeve (111 ; 131) in rigid connection with the drive piston (91 ; 125) or with the supporting piston (7), which in coupled position surrounds a bush body (114, 134) secured on the other constructional member (7 or 91 ; 125), whereafter this covering of the parts by a controllable locking bolt (110 ; 128) is boltable and releasable in form-locking manner, and acting on locking balls (113 ; 138) which, in bolted position, engage into an annular groove (115 ; 133) of the bush body (114 ; 134) and in holes through the wall (112 ; 132) of the sleeve (111 ; 131).

15. A driving arrangement according to claim 14, characterized in that the locking bolt (110 ; 128) is impinged upon in its bolting direction by a pretensioned tension spring (116 ; 129), as a result of which it secures in automatic locking manner the covering of the sleeve (111 ; 131) with the bush body (114 ; 134) after its coupling.

16. A driving arrangement according to claim 9, characterized in that the drive piston (56) in retracted position and the lowered rest position of the roll over bar (4) can be detachably bolted with its cylinder (57) by means of an electro-magnetically actuated catch (61) solid with the cylinder which engages into a shackle (62) connected with the drive piston (56).

17. A driving arrangement according to one or more of the foregoing claims, characterized in that the drive piston (74 ; 125) of the additional piston cylinder unit (71 ; 126) in retracted position and in lowered rest position of the roll over bar (4) is lockable in its hydraulic cylinder (72 ; 135) against an outgoing creep movement by means of of a snap-in lock (84 ; 123).

18. A driving arrangement according to claim 17, characterized in that the snap-in lock (123) comprises a locking slider sleeve (144) connected with the drive piston (125) which, in the retracted position of the latter presses locking balls (138) associated with the drive piston (125) into an annular groove (137) of the hydraulic cylinder (135), and thereby secures this position in form-locking manner, and which is limitedly slidable with the outward movement of the drive piston (125) relative to the cylinder (135) and by means of this control stroke releases the way for the locking balls (138) out of the annular groove (137).

19. A driving arrangement according to claim 18, characterized in that the locking slider sleeve (144) is acted upon in its locking direction by a pretensioned tension spring (145), and in that, after the indrawing of the drive piston (125) into the cylinder (135), automatically bolts the position of the drive piston (125).

20. A driving arrangement according to claims 6 and 17, characterized in that the constructional elements (134) of the crash coupling (122) which are associated with the drive piston (125) are constructed as one piece with those of the snap-in lock (123).

21. A driving arrangement according to at least either of claims 3 or 17, characterized in that the controllable locking member and/or the snap-in lock (84;

123) are actuatable in direct dependence upon the pressure impingement of the hydraulic drive piston (91 ; 125).

## Revendications

1. Dispositif d'actionnement d'un arceau de sécurité pour automobile, qui comporte au moins un mécanisme à cylindre-piston entraînant l'arceau de sécurité et par lequel cet arceau peut être transféré, lors d'une impulsion de commande déclenchée par une situation de collision, depuis une position abaissée de repos jusque dans une position relevée de soutien, le piston de soutien, après un déclenchement commande un verrouillage par action d'un ressort d'éjection, pouvant sortir de son cylindre de guidage et être à nouveau verrouillé dans la position limite de sortie, caractérisé en ce qu'au moins un mécanisme à cylindre-piston (1) peut être actionné au moyen d'un entraînement additionnel (19, ou 26, ou 54, ou 70, ou 87), qui peut être commandé à volonté en ce qui concerne la direction de mouvement et la vitesse du piston de soutien (7) sollicité par ressort, et en ce que l'influence de l'entraînement additionnel (19, ou 26, ou 54, ou 70, ou 87) sur le piston de soutien (7) sollicité par ressort, peut être supprimé lors de l'existence d'un signal de collision.

2. Dispositif d'actionnement selon la revendication 1, caractérisé en ce que le piston de soutien (7) peut, dans toute position de sortie, être verrouillé en opposition à un mouvement de rentrée.

3. Dispositif d'actionnement selon la revendication 2, caractérisé en ce que sur le piston de soutien (7) est formé, le long d'un axe longitudinal du pourtour, une denture de verrouillage (15 ; 31 ; 51 ; 82 ; 101), agissant contre un mouvement de rentrée et avec laquelle peut entrer en prise un élément de verrouillage (11 ; 32 ; 50, 83 ; 97) pouvant être commandé.

4. Dispositif d'actionnement selon la revendication 1, caractérisé en ce qu'une transmission irréversible (21), entraînée par moteur électrique, est en prise, par l'intermédiaire d'un pignon mené (22) avec une denture en développante (32), s'étendant dans une direction longitudinale le long d'un axe longitudinal du pourtour, du piston de soutien (37), et en ce que le pignon mené (22) peut être désaccouplé de l'entraînement (19) au moyen d'un coupleur (24).

5. Dispositif d'actionnement selon la revendication 1, caractérisé en ce que l'entraînement (26 ; 54 ; 70 ; 87 ; 153) est constitué par un mécanisme à cylindre et piston additionnel réglable (25, 55 ; 71, 88 ; 126).

6. Dispositif d'actionnement selon la revendication 5, caractérisé en ce que le piston d'entraînement (38 ; 74 ; 91 ; 125) du mécanisme à cylindre-piston additionnel (25 ; 71 ; 88 ; 126) est relié de façon séparable avec le piston de soutien (7) par l'intermédiaire d'un accouplement sensible à une collision (40 ; 81 ; 106 ; 122).

7. Dispositif d'actionnement selon la revendication 5, caractérisé en ce que le mécanisme à cylindre-piston additionnel (55 ; 71 ; 88 ; 126) comporte un cylindre hydraulique à double effet (57 ; 72 ; 89 ; 135), par lequel la vitesse du piston d'entraînement (56 ; 74 ; 91 ; 125) est réglable hydrauliquement dans la direction de sortie et de rentrée.

8. Dispositif d'actionnement selon la revendication 5, caractérisé en ce qu'il est prévu dans le cylindre (33), dans la direction longitudinale, une tige de réglage de course (34), sur laquelle agit une transmission irréversible à vis sans fin (36), entraînée par moteur électrique, et sur laquelle est disposé un écrou rainuré (37), mobile en translation longitudinale dans le cylindre (33) sous l'effet de la tige de réglage de course (34) et par lequel le piston d'entraînement (38) est déplaçable.

9. Dispositif d'actionnement selon la revendication 5, caractérisé en ce que le mécanisme à cylindre-piston additionnel (55) est fixé au moyen de son piston d'entraînement (56) sur le piston de soutien (7) et peut être verrouillé au moyen de son cylindre (57) sur le cylindre de soutien (5) par l'intermédiaire d'un cliquet (60), qui est déplaçable sous l'effet d'une impulsion de collision à partir de sa position de verrouillage et qui libère ainsi le cylindre (57), qui peut être entraîné avec le piston de soutien (7), dans un fourreau de guidage (67) parallèle au cylindre de soutien (5), en correspondance à la course totale dudit piston (7).

10. Dispositif d'actionnement selon la revendication 3, caractérisé en ce que l'élément de verrouillage est constitué par un coulisseau de verrouillage (11 ; 50) qui, pendant l'actionnement du piston de soutien (7) par l'entraînement (19 ; 54), peut être désaccouplé de la denture de verrouillage (15 ; 51) au moyen d'un électro-aimant (12, 53) et qui, lors d'une impulsion de collision et du fait que l'électro-aimant (12. 53) est alors désexcité, peut être amené dans une position active par un ressort (13 ; 52).

11. Dispositif d'actionnement selon la revendication 3, caractérisé en ce que l'élément de verrouillage est constitué par un cliquet de verrouillage (32 ; 83 ; 97) qui, lors d'une impulsion de collision, est engagé dans la denture de verrouillage (31 ; 82 ; 101) et qui, sous l'effet du mouvement réglé du piston d'entraînement (38 ; 74 ; 91) pendant ce déplacement, peut être dégagé au moyen d'une commande forcée fonction de ce mouvement.

12. Dispositif d'actionnement selon la revendication 11, caractérisé en ce que le cylindre (33 ; 72) du mécanisme à cylindre-piston additionnel (25 ; 71) est monté dans un fourreau de guidage (41 ; 73), qui autorise une course de commande, de façon à effectuer une translation limitée sur le cylindre de soutien (5), et en ce qu'un ressort de pression (42 ; 54) s'appuie par ses extrémités respectives contre le cylindre (33 ; 72) et contre le fourreau de guidage (41 ; 73) ; ce ressort ayant, dans la condition détendue, une plus petite précontrainte que le ressort d'éjection (29 ; 68) agissant sur le piston de soutien (7) et étant comprimé lors du mouvement du piston d'entraînement (38 ; 74), auquel cas également le cylindre (33 ; 72) est déplacé, en entraînant avec lui un levier (45 ; 55) qui dégage le cliquet de verrouillage (32 ; 83) de la denture de verrouillage (31 ; 82).

13. Dispositif d'actionnement selon la revendication 11, caractérisé en ce que le cliquet de verrouillage (97) peut être dégagé par un cylindre de pression (98), actionné hydrauliquement, agissant en opposition à des ressorts (103 et 104) et dont le conduit de commande (96) est en communication directe avec un conduit hydraulique (95) du cylindre à double effet (89) du mécanisme à cylindre-piston additionnel (88), de sorte que le cylindre de pression (98) est sollicité par de l'huile sous pression lors du mouvement du piston d'entraînement (91) et que le cliquet de verrouillage (97), sollicité par ressort, est dégagé de la denture de verrouillage (101), et en ce que les conduits hydrauliques (94 ; 95 ; 96) sont déchargés en pression lors d'une impulsion de collision, de sorte que le cliquet de verrouillage (97) est enclenché.

14. Dispositif d'actionnement selon la revendication 6, caractérisé en ce que l'accouplement sensible à une collision (106 ; 122) comporte un fourreau (111 ; 131), relié de façon fixe au piston d'entraînement (91 ; 125) ou au piston de soutien (7) et s'accroche dans la position d'accouplement, autour d'un corps en forme de douille (114 ; 134) fixé sur l'autre piston (7 ou 91 ; 125), et ensuite ce chevauchement mutuel desdites parties peut être verrouillé et déverrouillé par conjugaison de formes au moyen d'une broche de verrouillage (110 ; 128) pouvant être commandée et qui agit sur des billes de verrouillages (113 ; 138) qui, dans la position de verrouillage, sont engagées dans une rainure annulaire (115 ; 133) du corps en forme de douille (114 ; 134) et dans des trous (112 ; 132) ménagés dans la paroi du fourreau (111 ; 131).

15. Dispositif d'actionnement selon la revendication 14, caractérisé en ce que la broche de verrouillage (110 ; 128) est sollicitée dans sa direction de verrouillage par un ressort de serrage précontraint (116 ; 129), de sorte qu'il bloque automatiquement le chevauchement mutuel du fourreau (111 ; 131) et du corps en forme de douille (114 ; 134) après leur accouplement.

16. Dispositif d'actionnement selon la revendication 9, caractérisé en ce que le piston d'entraînement (56) peut être verrouillé de façon séparable, dans la position de rentrée et lorsque l'arceau de sécurité (4) se trouve dans la position abaissée de repos, avec son cylindre (57) par l'intermédiaire d'un cliquet (61) solidaire du cylindre, actionné électromagnétiquement et qui s'accroche dans un étrier (62) relié au piston d'entraînement (56).

17. Dispositif d'actionnement selon une ou plusieurs des revendications précédentes, caractérisé en ce que le piston d'entraînement (74 ; 125) du mécanisme à cylindre-piston additionnel (71 ; 126) peut être verrouillé, dans la position de rentrée et lorsque l'arceau de sécurité (4) se trouve dans la position abaissée de repos, dans son cylindre hydraulique (72 ; 135) en étant empêché d'effectuer un mouvement progressif de sortie, au moyen d'une serrure d'arrêt (84 ; 123).

18. Dispositif d'actionnement selon la revendication 17, caractérisé en ce que la serrure d'arrêt (123) comporte un fourreau (144) à taquets de verrouillage, relié au piston d'entraînement (125) et qui, dans sa position rentrée, pousse des billes de verrouillage (138) associées au piston d'entraînement (125) dans une rainure annulaire (137) du cylindre hydraulique (135) et fixe ainsi cette position par conjugaison de formes, en pouvant effectuer une translation limitée par rapport au cylindre (135) lors du mouvement de sortie du piston d'entraînement (125), et en libérant, au cours de cette course de commande, la distance nécessaire pour que les billes de verrouillage (138) sortent de la rainure annulaire (137).

19. Dispositif d'actionnement selon la revendication 18, caractérisé en ce que le fourreau (134) à taquets de verrouillage est sollicité dans sa direction de verrouillage par un ressort précontraint (145) et en ce que, après le mouvement de rentrée du piston d'entraînement (125) dans le cylindre (135), la position du piston d'entraînement (125) est automatiquement verrouillée.

20. Dispositif d'actionnement selon les revendications 6 et 17, caractérisé en ce que des composants (134), associés au piston d'entraînement (125), de l'accouplement sensible à une collision (122) et de la serrure d'arrêt (123) forment une seule et même pièce.

21. Dispositif d'actionnement selon au moins une des revendications 3 ou 17, caractérisé en ce que l'élément de verrouillage (97) pouvant être commandé et/ou la serrure d'arrêt (84 ; 123) peuvent être actionnés en dépendance directe de la sollicitation en pression du piston hydraulique d'entraînement (91 ; 125).

Fig.1

Fig. 2

Fig. 3

Fig. 4

EP 0 309 686 B1

16

Fig. 5

Fig.6

Fig.7

# Fig. 8

Fig. 9

Fig. 10